# EUROPÄISCHE PATENTANMELDUNG

(11) **EP 1 508 481 A1**
(43) Veröffentlichungstag der Anmeldung: **23.02.2005**
(21) Anmeldenummer: 04018363.4
(22) Anmeldetag: 03.08.2004
(51) Int. Cl.: B60R 16/02

(54) **Aktuatoreinheit in einem Kraftfahrzeug und Aktuatorsteuersystem**

(30) Priorität: 21.08.2003 DE 10338459
(71) Anmelder: ArvinMeritor GmbH, 63128 Dietzenbach (DE)
(72) Erfinder: Heyn, Detlef, 35274 Kirchhain (DE)
(74) Vertreter: Strass, Jürgen

(57) **Zusammenfassung**

Eine Aktuatoreinheit (12) in einem Kraftfahrzeug (10) umfaßt eine Empfangseinrichtung (14) zum Empfang drahtlos übertragener Daten. Ein Aktuatorsteuersystem umfaßt eine Aktuatoreinheit (12) und eine Steuereinheit (18; 20). Die Steuereinheit (18; 20) umfaßt eine Sendeeinrichtung (16; 22), die auf die Empfangseinrichtung (14) der Aktuatoreinheit (12) abgestimmt ist.

## Beschreibung

Die Erfindung betrifft eine Aktuatoreinheit in einem Kraftfahrzeug sowie ein Aktuatorsteuersystem mit einer erfindungsgemäßen Aktuatoreinheit und einer Steuereinheit.

Kraftfahrzeuge umfassen eine Vielzahl von Aktuatoreinheiten wie z.B. Schiebedachantriebe, Fensterheberantriebe und Hubmagnetantriebe für Schließsysteme. Es besteht ein Bedarf, bei solchen Aktuatoreinheiten neue Funktionalitäten zu integrieren, fahrzeugspezifische Kodierungen vorzunehmen und Parameter einzustellen (Parametrisierungen). Dies ist bei bisherigen Aktuatoreinheiten nur dann möglich, wenn eine Kommunikation mit der Aktuatoreinheit über ein Busleitungssystem vorgesehen ist. Auf eine solche Kommunikation wird aufgrund des unverhältnismäßigen Verkabelungsaufwands oft verzichtet. Insbesondere für eine sogenannte End-Of-Line-Kodierung ist aber eine Kommunikation mit einer Steuereinheit erforderlich, was zu einem erhöhten Aufwand in der Fahrzeug-Fertigungslinie führt.

Aufgabe der Erfindung ist es, eine Kommunikation mit einer Aktuatoreinheit zu ermöglichen, die keinen übermäßigen Verkabelungsaufwand zur Folge hat.

Zur Lösung dieser Aufgabe wird eine Aktuatoreinheit in einem Kraftfahrzeug vorgeschlagen, die eine Empfangseinrichtung zum Empfang drahtlos übertragener Daten umfaßt. Die Erfindung sieht auch ein Aktuatorsteuersystem mit einer erfindungsgemäßen Aktuatoreinheit und einer Steuereinheit vor, die eine Sendeeinrichtung umfaßt, welche auf die Empfangseinrichtung der Aktuatoreinheit abgestimmt ist.

Die Erfindung ermöglicht eine drahtlose Kommunikation mit der Aktuatoreinheit, so daß auf eine hierfür bisher erforderliche Verkabelung verzichtet werden kann. Die erfindungsgemäße Aktuatoreinheit bzw. das erfindungsgemäße Aktuatorsteuersystem erlauben es, neue Funktionalitäten zu integrieren, die nicht leitungsgebunden sind. Ferner können Aktuatoren über die drahtlose Verbindung kodiert werden. Dies ist insbesondere dann von Interesse, wenn eine Fahrzeugkommunikation nicht vorgesehen ist, eine fahrzeugspezifische Kodierung jedoch aufgrund unterschiedlicher Umgebungsbedingungen erforderlich ist. Die drahtlose Kommunikation ermöglicht auch die Parametrisierung der Aktuatoren, so daß in Abhängigkeit von bestimmten Rahmenbedingungen (z. B. Einklemmschutz bei Schiebedächern und Fenstern, Hitzeschutz, Fahrzeugtyp, Fahrzeugzustand, etc.) eine optimale Leistungsfähigkeit der Aktuatoren erreicht werden kann.

Die Empfangseinrichtung der Aktuatoreinheit und die Sendeeinrichtung der Steuereinheit sind vorzugsweise für eine Funkübertragung nach dem Bluetooth-Standard ausgebildet, es können aber auch andere geeignete Standards bei der Entwicklung der Aktuatoreinheiten und Steuereinheiten zugrundegelegt werden.

Gemäß einer Weiterbildung der Erfindung umfaßt die Aktuatoreinheit einen mit einer Versorgungsleitung des Fahrzeugs oder einer artverwandten Versorgungsleitung verbundenen Energiespeicher, so daß die oben genannten Aktionen unabhängig vom Anliegen einer Spannung am Bordnetz des Fahrzeugs bzw. in der Fertigungslinie durchgeführt werden können.

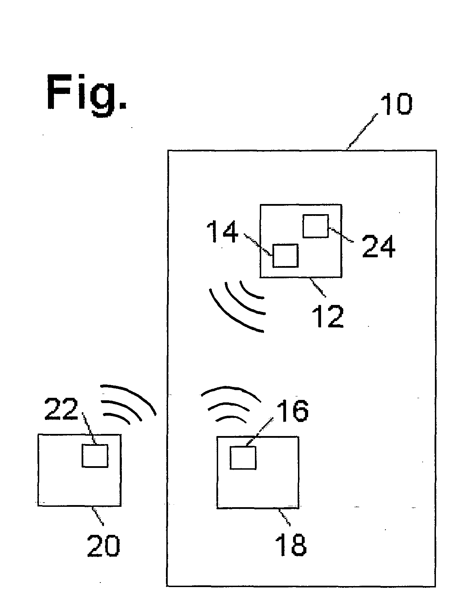

Weitere Merkmale und Vorteile der Erfindung ergeben sich aus der nachfolgenden Beschreibung eines Ausführungsbeispiels und aus der beigefügten Zeichnung, auf die Bezug genommen wird.

In der Zeichnung zeigt die einzige Figur eine schematische Darstellung eines erfindungsgemäßen Aktuatorsteuersystems mit einer erfindungsgemäßen Aktuatoreinheit.

In der Figur ist ein Kraftfahrzeug 10 mit einer Aktuatoreinheit 12 dargestellt. Die Aktuatoreinheit 12 steht stellvertretend für eine Vielzahl möglicher Aktuatoreinheiten in einem Fahrzeug und kann z.B. ein Antrieb für ein Schiebedach, ein Seitenfenster oder ein Hubmagnetantrieb für ein Schließsystem sein. Auf einer Leiterplatte der Aktuatoreinheit 12 ist eine Empfangseinrichtung 14 angeordnet, die auf eine Sendeeinrichtung 16 einer im Fahrzeug 10 angeordneten internen Steuereinheit 18 abgestimmt ist. Die Sendeeinrichtung 16 und die Empfangseinrichtung 14 sind für eine Funkübertragung von Daten ausgelegt und unterliegen dem Bluetooth-Standard. Tatsächlich können sowohl die Empfangseinrichtung 14 der Aktuatoreinheit 12 als auch die Sendeeinrichtung 16 der Steuereinheit 18 kombinierte Sende/Empfangseinrichtungen sein, so daß nicht nur eine uni-, sondern auch eine bidirektionale drahtlose Datenübertragung zwischen der Steuereinheit 18 und der Aktuatoreinheit 12 stattfinden kann.

Die Aktuatoreinheit 12 kann auch von einer außerhalb des Fahrzeugs 10 angeordneten externen Steuereinheit 20 mit einer Sende- bzw. Sende/Empfangseinrichtung 22 angesprochen werden. Eine solche externe Steuereinheit 20 kann beispielsweise in einem Servicebetrieb vorgesehen sein. Somit können insbesondere die Integration neuer Funktionen, die Kodierung und die Parametrisierung der Aktuatoreinheit 12 auch von außerhalb des Fahrzeugs 10 vorgenommen werden.

Die Aktuatoreinheit 12 umfaßt ferner einen wiederaufladbaren Energiespeicher 24 in Form eines Akkumulators oder spezieller Kondensatoren (Gold Caps), der über eine Verbindung zu einer Versorgungsleitung des Fahrzeugs (nicht gezeigt) aufgeladen werden kann. Somit steht für die Integration neuer Funktionen, die Kodierung oder die Parametrisierung eine gepufferte Spannungsversorgung zur Verfügung, so daß diese Aktionen (bis zur Entladung des Energiespeichers) auch unabhängig vom tatsächlichen Anliegen einer Versorgungsspannung in der Versorgungsleitung vorgenommen werden können.

### Bezugszeichenliste:

- 10:: Fahrzeug
- 12:: Aktuatoreinheit
- 14:: Empfangseinrichtung der Aktuatoreinheit
- 16:: Sendeeinrichtung der internen Steuereinheit
- 18:: interne Steuereinheit
- 20:: externe Steuereinheit
- 22:: Sendeeinrichtung der externen Steuereinheit
- 24:: Energiespeicher

## Patentansprüche

1. Aktuatoreinheit in einem Kraftfahrzeug, **dadurch gekennzeichnet, daß** die Aktuatoreinheit (12) eine Empfangseinrichtung (14) zum Empfang drahtlos übertragener Daten umfaßt.

2. Aktuatoreinheit nach Anspruch 1, **dadurch gekennzeichnet, daß** die Empfangseinrichtung (14) auf einer Leiterplatte der Aktuatoreinheit (12) angeordnet ist.

3. Aktuatoreinheit nach Anspruch 1 oder 2, **dadurch gekennzeichnet, daß** die Empfangseinrichtung (14) eine kombinierte Sende/Empfangseinrichtung ist.

4. Aktuatoreinheit nach einem der vorhergehenden Ansprüche, **dadurch gekennzeichnet, daß** die Aktuatoreinheit (12) einen mit einer Versorgungsleitung des Fahrzeugs (10) verbundenen Energiespeicher (24) umfaßt.

5. Aktuatoreinheit nach Anspruch 4, **dadurch gekennzeichnet, daß** der Energiespeicher (24) wenigstens einen Akkumulator umfaßt.

6. Aktuatoreinheit nach Anspruch 4, **dadurch gekennzeichnet, daß** der Energiespeicher (24) wenigstens einen Kondensator umfaßt.

7. Aktuatoreinheit nach einem der vorhergehenden Ansprüche, **dadurch gekennzeichnet, daß** die Aktuatoreinheit (12) ein Schiebedachantrieb, ein Fensterheberantrieb oder ein Hubmagnetantrieb für ein Öffnungs- und/oder Schließsystem ist.

8. Aktuatorsteuersystem mit einer Aktuatoreinheit nach einem der vorhergehenden Ansprüche und einer Steuereinheit (18; 20), **dadurch gekennzeichnet, daß** die Steuereinheit (18; 20) eine Sendeeinrichtung (16; 22) umfaßt, die auf die Empfangseinrichtung (14) der Aktuatoreinheit (12) abgestimmt ist.

9. Aktuatorsteuersystem nach Anspruch 8, **dadurch gekennzeichnet, daß** die Empfangseinrichtung (14) der Aktuatoreinheit (12) und die Sendeeinrichtung (16; 22) der Steuereinheit (18; 20) für eine Funkübertragung nach dem Bluetooth-Standard ausgebildet sind.

10. Aktuatorsteuersystem nach Anspruch 8 oder 9, **dadurch gekennzeichnet, daß** die Sendeeinrichtung (16; 22) der Steuereinheit (18; 20) eine kombinierte Sende/Empfangseinrichtung ist.

11. Aktuatorsteuersystem nach einem der Ansprüche 8 bis 10, **dadurch gekennzeichnet, daß** die Steuereinheit eine innerhalb des Fahrzeugs (10) angeordnete interne Steuereinheit (18) ist.

12. Aktuatorsteuersystem nach einem der Ansprüche 8 bis 10, **dadurch gekennzeichnet, daß** die Steuereinheit eine außerhalb des Fahrzeugs (10) angeordnete externe Steuereinheit (20) ist.

13. Aktuatorsteuersystem nach einem der Ansprüche 8 bis 12, **dadurch gekennzeichnet, daß** die Steuereinheit (18; 20) zur Kommunikation mit mehreren Aktuatoreinheiten (12) ausgelegt ist.
